# EUROPEAN PATENT APPLICATION

(11) **EP 1 870 740 A1**
(43) Date of publication of application: **26.12.2007**
(21) Application number: 06300705.8
(22) Date of filing: 20.06.2006
(51) Int. Cl.: G02B 3/14, G02F 1/133, G09G 3/18, G02B 26/02

(54) **Multiple liquid lens driver**

(71) Applicant: Varioptic, 69007 Lyon (FR)
(72) Inventor: Craen, Pierre, 69002, LYON (FR); Morichaud, Gwenaël, 38290, FRONTONAS (FR)
(74) Representative: de Beaumont, Michel

(57) **Abstract**

The invention concerns drive circuitry for driving a plurality of liquid lenses, each liquid lens comprising first and second immiscible liquids, an interface between the first and second liquids being movable by electrowetting by application of a drive voltage signal, said drive circuitry arranged to generate an independent drive voltage signal for each of said liquid lenses, the drive circuitry comprising: generating means (406, 408, 410, 412) arranged to generate a fixed drive voltage (V_{dc}); a duty cycle controller (418) arranged to receive data values indicating a duty cycle to be applied to each of said plurality of liquid lenses, and to generate a control timing signal for each of said plurality of liquid lenses, each control timing signal having the duty cycle indicated by the controller; and driving means (426, 428, 430, 432) arranged to generate an independent drive voltage signal for each of said plurality of liquid lenses by selectively applying said fixed drive voltage, based on the control timing signal associated with each liquid lens.

## Description

### FIELD OF THE INVENTION

The present invention relates to a circuit for driving multiple liquid lenses, and in particular to a driving circuit for driving liquid lenses having liquids moveable by electrowetting.

### BACKGROUND OF THE INVENTION

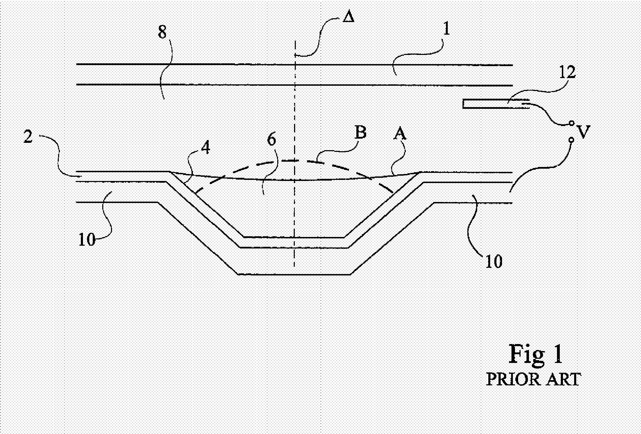

A number of embodiments of variable focus liquid lenses are described in European patent N°1166157. Figure 1 of the present application corresponds to Figure 12 of that patent and illustrates an example of a variable focus liquid lens according to the prior art. As shown in Figure 1, a variable focus lens comprises a fluid chamber with two insulating transparent plates 1 and 2 and an optical axis Δ. Plate 2 comprises a conical or cylindrical recess, with a side face 4 inclined with respect to the optical axis Δ of the device, and which receives a drop of a first liquid 6 which is an insulating liquid. The remainder of the chamber extending up to transparent plate 1 is filled with a second liquid 8, which is conductive. The liquids are immiscible, and have different refraction indexes but roughly the same density, forming a refractive interface or meniscus (A,B). A transparent electrode 10 is formed over the outer surface of insulating plate 2. Another electrode 12 is provided in contact with the second liquid 8.

Due to the electrowetting effect, it is possible, by applying a voltage between electrodes 10 and 12, to change the curvature of the interface between the first liquid 6 and the second liquid 8, for example, from an initial concave shape as shown by line A, to a convex shape as shown by line B. Thus rays of light passing through the cell perpendicular to the plates 1 and 2 in the region of the drop 6 will be focused more or less depending on the voltage applied.

A driver circuit is required to generate the voltages for controlling liquid lenses such as the liquid lens of Figure 1. Examples of driving circuits are described in International Patent Application WO 2005/052654 and US Patent Application US 2005/0213653. However, such circuits are designed to drive only a single lens.

It is proposed by the present applicant to provide multiple liquid lenses in a lens module of an optical system in order to allow for the correction of aberrations, as well as to provide other features such as a zoom function. In order to independently drive multiple liquid lenses, one solution would be to duplicate the driver circuitry disclosed in the prior art. However, this solution is disadvantageous as it is costly, and consumes a large surface area of an integrated circuit or circuit board. In many environments in which space is limited, for example in the case of liquid lens driving circuits for driving liquid lens incorporated in a mobile telephone, it is important that space occupied by components of the driving circuitry is minimized. There is thus a need for a driving circuit that is able to independently drive multiple liquid lenses without using excessive space and whilst remaining economical.

### SUMMARY OF THE INVENTION

The present invention aims to at least partially address the above needs.

According to one aspect of the present invention there is provided drive circuitry for driving a plurality of liquid lenses, each comprising first and second immiscible liquids, an interface between the liquids being movable by electrowetting by application of a drive voltage signal, said drive circuitry arranged to generate an independent drive voltage signal for each of said liquid lenses, the drive circuitry comprising: generating means arranged to generate a fixed drive voltage; a duty cycle controller arranged to receive data values indicating a duty cycle to be applied to each of said plurality of liquid lenses, and to generate a control timing signal for each of said plurality of liquid lenses, each control timing signal having the duty cycle indicated by the controller; and driving means arranged to generate an independent drive voltage signal for each of said plurality of liquid lenses by selectively applying said fixed drive voltage, based on the control timing signal associated with each liquid lens.

According to a further aspect of the present invention, there is provided a method of driving a plurality of liquid lenses, each liquid lens comprising first and second immiscible liquids, an interface between the first and second liquids being movable by electrowetting by application of a drive voltage signal, the method comprising: generating a fixed drive voltage; receiving data values indicating a duty cycle to be applied to each of said plurality of liquid lenses and based on said data values generating a control timing signal for each of said plurality of liquid lenses; and generating an independent drive voltage signal for each of said plurality of liquid lenses by selectively applying said fixed drive voltage, based on the control timing signal associated with each liquid lens.

Further objects, features and advantages of the present invention will become apparent from the following detailed description of exemplary preferred embodiments, when considered together with the accompanying drawings.

### BRIEF DESCRIPTION OF THE DRAWINGS

In the drawings:
Figure 1 illustrates schematically an embodiment of a known variable focus liquid lens;
Figure 2 illustrates schematically circuitry for controlling and driving multiple liquid lenses according to a first embodiment of the present invention;
Figure 3 illustrates the driving circuitry of Figure 2 in more detail according to the first embodiment of the present invention;
Figure 4 illustrates the DC-DC generator of Figure 3 in more detail according to the first embodiment of the present invention;
Figure 5A illustrates one of the H-bridges of Figure 3 in more detail according to the first embodiment of the present invention;
Figure 5B illustrates an alternative embodiment of the H-bridges of Figure 3; and
Figures 6A and 6B illustrate timing diagrams relating to the circuitry of Figure 3 according to first and second examples respectively.

### DETAILED DESCRIPTION OF THE INVENTION

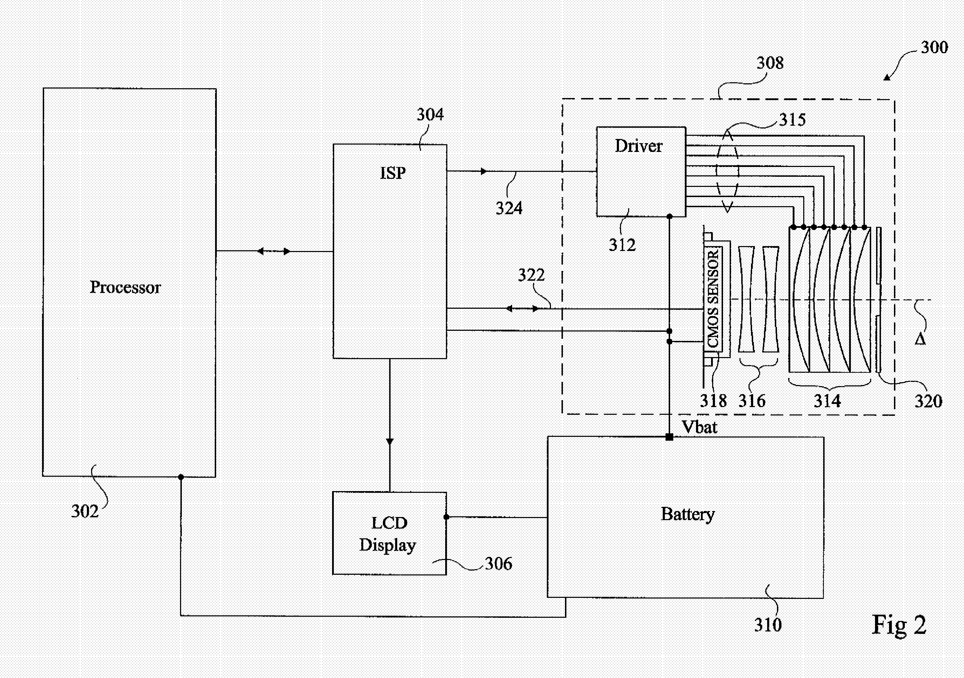

Figure 2 illustrates an optoelectronic module 300 comprising a plurality of liquid lenses. Module 300, which is for example incorporated in a mobile telephone, comprises a processor 302, which is for example the baseband processor of a mobile phone, an image signal processor (ISP) 304, LCD display 306, a lens module 308 and a battery 310 which is for example a mobile phone battery.

Lens module 308 comprises a driver circuit 312, for driving the plurality of variable focus liquid lenses 314. In this example four liquid lenses are provided, one of which is used for focusing, a second for zooming, and third and fourth lenses for the correction of chromatic and field curvature aberrations. In alternative embodiments, different liquid lens arrangements having a different number of liquid lenses could be driven.

The variable focus liquid lenses 314 are for example liquid lenses as described in relation to Figure 1 above, or any similar liquid lens having a focus variable by application of a drive voltage. Each lens comprises first and second electrodes which receive a drive voltage signal from driver circuit 312 via lines 315. The lens module 308 preferably further comprises a number of fixed lenses 316, and a CMOS (complementary metal oxide semiconductor) sensor 318 for receiving images received via the variable focus lenses and fixed lenses. In alternative embodiments a different type of sensor could be used, such as a CCD (charge-coupled device) sensor. The CMOS sensor 318, fixed lenses 316 and variable focus lenses 314 are arranged along an optical axis Δ of the lens module, and a variable diaphragm 320 provides means for adjusting the aperture of the lens module, allowing the light level entering the lens to be controlled.

As illustrated, the processor 302, LCD display 306, ISP 304, CMOS sensor 318 and driver 312 are for example powered by a DC voltage level V_{bat} from battery 310.

In operation, ISP 304, under control of processor 302, determines and generates data signals indicating the required drive voltages for each of the liquid lenses 314. The drive voltage levels for each lens are for example determined based on algorithms processed by the ISP, which optimises focusing, zoom, and correction of optical aberrations such as chromatic aberration and field curvature aberration of the lens module. ISP preferably receives signals from CMOS sensor 318, which are used in particular to indicate when focusing has been achieved.

ISP 304 provides these control signals on a serial bus 324 to driver circuit 312, which generates drive signals for driving each of the liquid lenses based on these control signals. The drive signals are provided to each of the liquid lenses via lines 315. In particular, the driver circuit 312 is connected via lines 315 to the first and second electrodes in each liquid lens, and provides the drive voltage across these two electrodes. The drive voltage to each liquid lens is preferably an oscillating (AC) voltage.

ISP 304 also controls CMOS sensor 318 to capture the image received via the lenses, at an image formation region of the sensor. ISP 304 receives signals generated by CMOS sensor 318 based on the captured image on lines 322. The captured image can then be displayed on LCD display 306.

Diaphragm 320 is a mechanical diaphragm controlled by independent circuitry under control of the ISP 304. In alternative embodiments diaphragm 320 could be a liquid diaphragm comprising an opaque liquid moveable by electrowetting, and could be driven by the driver circuit 312 in the same way as the liquid lenses 314.

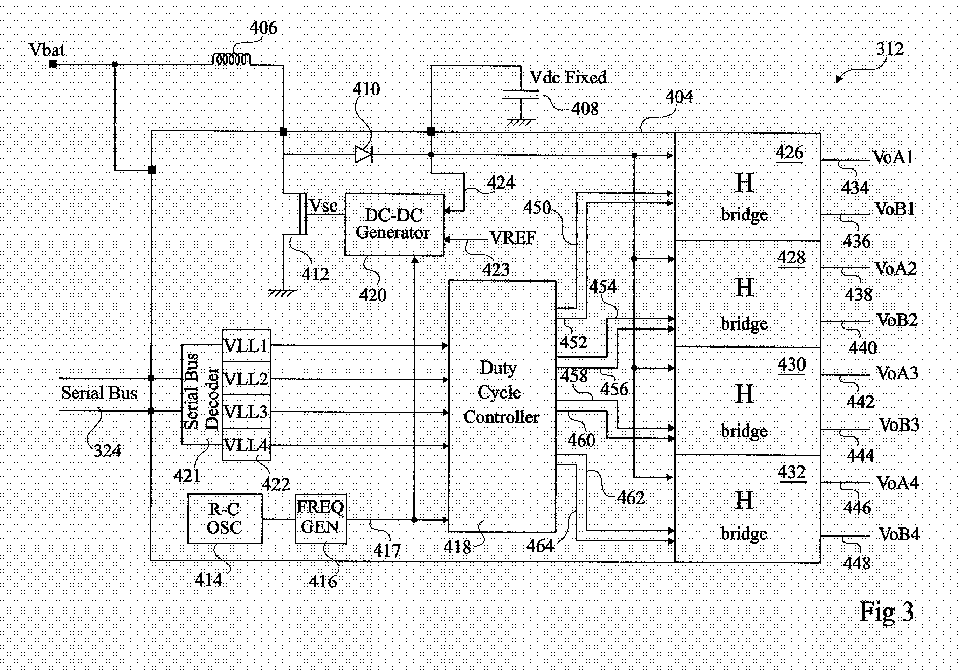

Figure 3 illustrates the driver circuit block 312 of Figure 2 in more detail.

With reference to Figure 3, driver circuit 312 comprises an integrated circuit (IC) 404, an inductor 406, and a capacitor 408. IC 404 comprises a diode 410 and a MOSFET (metal oxide semiconductor field effect transistor) 412. IC 404 further comprises an RC (resistor-capacitor) oscillator 414 for generating a reference oscillating signal of a given frequency which is provided to a frequency generation block 416. Frequency generation block 416 generates a timing signal based on the reference oscillating signal, and outputs this signal on line 417 to a duty cycle controller 418 and to a DC-DC generator 420.

Serial bus 324 is connected to IC 404, and a serial bus decoder 421 is provided on IC 404 for decoding the serial data signals received via serial bus 324 and storing the data in first, second, third and fourth registers 422, each of these registers storing drive voltage data associated with a respective one of the first, second, third and fourth liquid lenses (not shown in Figure 3).

DC-DC generator 420 controls MOSFET 412 based on a reference voltage V_{REF} received on line 423 and a feedback signal received on line 424. In particular, DC-DC generator 420 generates a switch control voltage signal V_{sc}, based on the feedback and reference voltages, and provided to the gate terminal of MOSFET 412. The main current terminals of MOSFET 412 are connected to ground and to a first terminal of inductor 406. The first terminal of inductor 406 is also connected to a first terminal of capacitor 408 via diode 410. The second terminal of inductor 406 is connected to V_{bat} and the second terminal of capacitor 408 is connected to ground.

The first terminal of capacitor 408 is also connected to first, second, third and fourth H-bridges 426, 428, 430 and 432 for driving the first, second, third and fourth liquid lenses. In particular, the first H-bridge 426 provides output voltages V_{oA1} and V_{oB1} on lines 434 and 436 respectively for driving a first liquid lens. In a similar fashion, second H-bridge 428 provides output voltages V_{oA2} and V_{oB2} on lines 438 and 440 respectively for driving a second liquid lens. The third H-bridge 430 provides output voltages V_{oA3} and V_{oB3} on lines 442 and 444 for driving a third liquid lens, and the fourth H-bridge 432 provides output voltages V_{oA4} and V_{oB4} on lines 446 and 448 for driving a fourth liquid lens.

In operation, MOSFET 412 is switched by DC-DC generator 420 such that current is driven through inductor 406 to capacitor 408 via diode 410. In particular, when MOSFET 412 is switched on, current is driven through inductor 406 to ground. When MOSFET 412 is switched off, current continues to flow through inductor 406, and is driven through diode 410 to charge capacitor 408. Diode 410 prevents capacitor 408 from discharging back through MOSFET 412. In this way a DC voltage V_{dc} is generated across capacitor 408 which can be much higher than V_{bat}. This DC voltage is for example fixed at 60 volts.

In the present embodiment the voltage V_{dc} is fixed by the reference voltage V_{REF}. Based on this reference voltage the required fixed DC voltage across capacitor 408 is provided. V_{REF} will generally be constant to maintain the same fixed DC voltage across capacitor 408, but in some embodiments this reference voltage could be increased slightly when high load is expected from the liquid lenses, to prevent the fixed DC voltage V_{dc} dropping.

In order to provide the fine voltage control of the drive voltage to each of the liquid lenses, rather than varying the level of the DC voltage generated, a duty cycle controller 418 is provided.

Duty cycle controller 418 controls the duty cycle of the drive signal to each of the H-bridges such that the duty cycle of the drive signal to each liquid lens is varied. Duty cycle controller 418 generates the duty cycle signal for each liquid lens based on the data from the four registers 422, which store data received via serial bus 324 and decoded by serial bus decoder 421. The peak-to-peak voltage of the drive signal to each liquid lens is preferably fixed at 2V_{dc}, which is for example at 120 V, however due to the variation in duty cycle of the drive voltage, the RMS (root mean squared) voltage of each of the drive voltages is varied, thus varying the power provided to each liquid lens. In the case that the drive voltage is a square wave, a peak-to-peak voltage of 120 V provides an RMS voltage of 60 V. Given sufficient control of the duty cycle, each liquid lens can thus be controlled with the required precision. An example of the required precision is a drive voltage that can be controlled in steps of 60 mV RMS between 0 and 60 V RMS. Thus approximately 1000 steps are required between a duty cycle of 0 percent and a duty cycle of 100 percent. Furthermore, 10 or more bits of data, converted and transmitted from the ISP 304 to driver 312 via the serial bus 324, is for example provided for each lens to determine the required duty cycle.

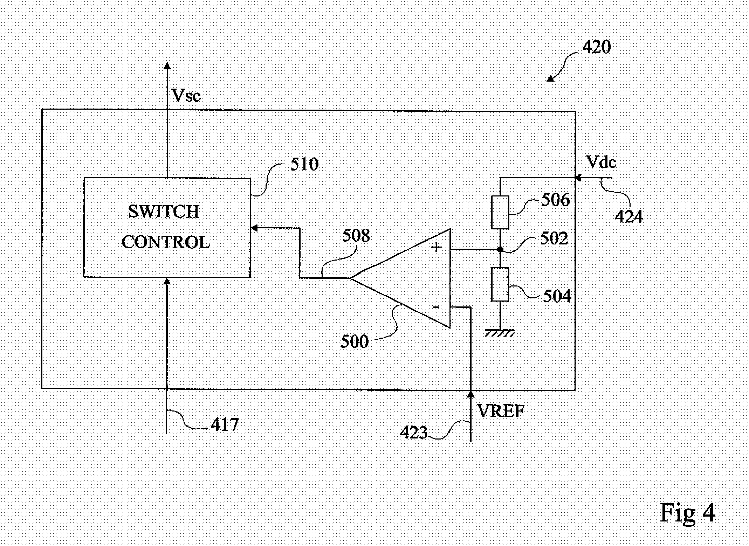

Figure 4 illustrates the DC-DC generator 420 of Figure 3 in more detail. As shown in Figure 4, DC-DC generator 420 preferably comprises a comparator 500, in this example an operation amplifier (Op amp), having two differential inputs, a first receiving the reference voltage V_{REF} on line 423 and the second connected to a node 502 which is connected to ground via a first resistor 504, and to V_{dc} on line 424 via a second resistor 506. The first and second resistors 504, 506 act as a potential divider dividing the voltage V_{dc} to a suitable value for comparison with V_{REF'} for example dividing V_{dc} by thirty if a value of 2 V for V_{REF} corresponds to 60 V of V_{dc}. Op amp 500 provides an output on line 508 to a switch control block 510.

Switch control block 510 also receives the timing signal on line 417 generated by frequency generation block 416, and adjusts this signal based on the output of Op amp 500 to provide the switch control signal V_{sc} to control MOSFET 412.

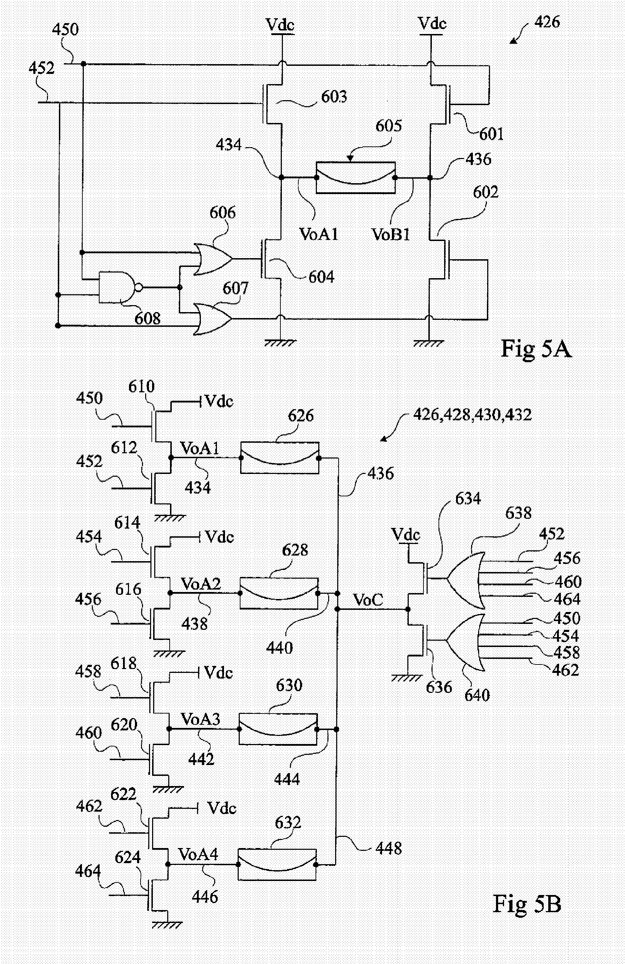

The first H-bridge 426 of Figure 3 is shown in more detail in Figure 5A. The other H-bridges of Figure 3 comprise identical circuitry connected to the corresponding control lines. H-bridge 426 comprises four MOSFETs 601, 602, 603 and 604. First and second MOSFETs 601, 602 are connected in series via their main current terminals between the fixed voltage V_{dc} and ground. Third and fourth MOSFETs 603, 604 are also connected in series via their main current terminals between the fixed voltage V_{dc} and ground. A first liquid lens 605 is connected between output line 434 of IC 404 which is connected to the node between the third and fourth MOSFETs 603, 604 and output line 436 of IC 404 which is connected to the node between the first and second MOSFETs 601, 602.

The gate terminals of the first and third MOSFETs 601, 603 are connected to lines 450, 452 respectively and thus directly receive the signals generated by the duty cycle controller 418. The gate terminals of the second and fourth MOSFETs 602, 604 are connected to outputs of first and second two-input OR gates 606, 607 respectively. Each OR gate 606, 607 comprises a first input connected to lines 450, 452 respectively. A second input of each OR gate is connected to the output of a two-input NAND gate 608, which comprises first and second inputs connected to lines 450, 452 respectively.

In operation, when the control signal on line 452 is high whilst the control signal on line 450 is low, the first and fourth MOSFETs 601, 604 are switched on and line 436 is connected to V_{dc} whilst line 434 is connected to ground. On the other hand, when the control signal on line 452 is low whilst the control signal on line 450 is high, the second and third MOSFETs 602, 603 are switched on and line 434 is connected to V_{dc} whilst line 436 is connected to ground. When both control signals on lines 450 and 452 are low, the output of NAND gate 608 is high, and thus both the second and fourth MOSFETs 602, 604 will be switched on, connecting both lines 434 and 436 to ground.

Figure 5B illustrates an alternative embodiment of the first, second, third and fourth H-bridges 426 to 432, in which the second electrode of each of the liquid lens is connected to a single pair of common MOSFETs. This circuitry comprises ten MOSFETs labelled 610, 612, 614, 616, 618, 620, 622 624, 634 and 636 respectively. The first and second MOSFESTs 610, 612, are connected in series between V_{dc} and ground via their main current terminals. Likewise, the third and fourth MOSFETs 614, 616, fifth and sixth MOSFETs 618, 620, and seventh and eighth MOSFETs 622, 624 are also connected in series between V_{dc} and ground via their main current terminals. The gates of the first and second MOSFETs 610, 612 are connected to input lines 450 and 452 respectively. The gate terminals of the third, fourth, fifth, sixth, seventh and eighth MOSFETs are connected to input lines 454, 456, 458, 460, 462 and 464 respectively. The node between the first and second MOSFETs 610, 612 is connected to output line 434, providing the output voltage V_{oA1} to the first liquid lens 626. The node between the third and fourth MOSFETs 614, 616 is connected to output line 438 connected to a second liquid lens 628 providing output voltage V_{oA2}. The node between the fifth and sixth MOSFETs 618, 620 is connected to output line 442 providing output voltage V_{oA3} to a third liquid lens 630. The node between the seventh and eighth MOSFETs 622, 624 is connected to output line 446 providing output voltage V_{oA4} to a fourth liquid lens 632.

The ninth and tenth MOSFETs 634, 636 of the circuit of Figure 5B are common MOSFETs providing the connection to the second electrode of each of the first, second, third and fourth liquid lenses. MOSFETs 634 and 636 are connected in series between V_{dc} and ground via the main current terminals. The node between MOSFETs 634 and 636 is connected to each of the first, second, third and fourth liquid lenses, effectively providing output lines 436, 440, 444 and 448 of the H-bridges. The gate terminal of MOSFET 634 is connected to the output of a first four-input OR gate 638, having its four input pins connected to the input lines 452, 456, 460 and 464 respectively such that MOSFET 634 is switched on when the signal on any of these lines is high. The gate terminal of MOSFET 636 is connected to the output of a second four-input OR gate 640, having its four input pins connected to the input lines 450, 454, 458 and 462 such that MOSFET 636 is switched on when the signal on any of these lines is high.

In operation, when any of the signals on lines 450, 454, 458 or 462 is high while the corresponding signal on lines 452, 456, 460, 464 is low, the first electrode of the corresponding liquid lens will be connected to V_{dc}, and the second electrode to ground via MOSFET 636. On the other hand, when any of the signals on lines 450, 454, 458 or 462 is low while the corresponding signal on lines 452, 456, 460, 464 is high, the first electrode of the corresponding liquid lens will be connected to ground, and the second electrode to V_{dc} via MOSFET 634. It will be apparent that that if a given lens is to be off during a certain period and during this period both control signals associated with the given lens are low, it is possible that one of the other signals on lines 452, 456, 460, 464 is high at the same time. This will result in the given lens having a first electrode that is floating and a second electrode connected to V_{dc}. In alternative embodiments, floating nodes can be avoided in this case when a given lens is to be off by instead connecting the first electrode of the given lens to V_{dc} for the period when the second electrode is connected to V_{dc}.

Operation of the circuitry of Figure 5B is equivalent to the operation of four H-bridges arranged according to the circuitry of Figure 5A described above, and thus this circuitry reduces the number of MOSFETs required for four H-bridges by six. Given that sixteen MOSFETs are required in total in the H-bridge arrangement of Figure 5a, and ten in Figure 5B, this results in a reduction in circuit area of the H-bridge of approximately 40 percent.

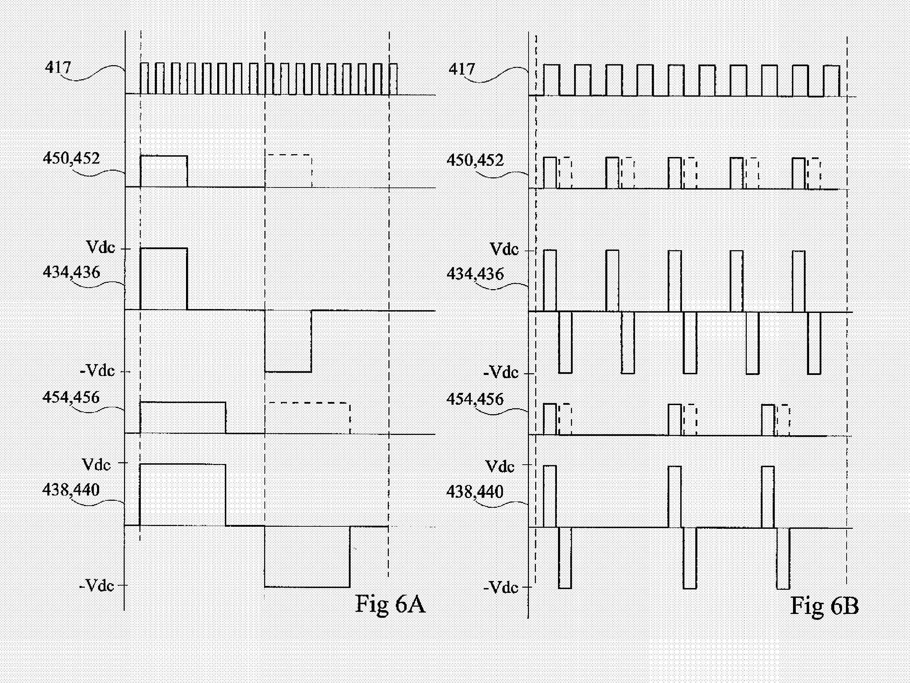

Figures 6A and 6B illustrate the timing of signals on line 417, lines 450 and 452, lines 434 and 436, lines 454 and 456, and lines 438 and 440 in the driving circuitry of Figure 3. Figure 6A illustrates a case in which the duty cycle controller 418 controls the width of each pulse, this width providing the variation in duty cycle for controlling the power to each of the different lenses. Figure 6B illustrates an embodiment in which the duty cycle controller 418 varies the number of standard-width pulses provided during a determined period to each of the lenses, the number of these pulses providing the variation in the duty cycle for controlling the power to each of the different lenses. This second duty cycle control is particularly relevant to embodiment of the H-bridges 426, 428, 430, 432 of Figure 5B.

Firstly with reference to Figure 6A, the timing signal in the form of a square wave generated by the frequency generator 416 on line 417 is shown labelled 417. The duty cycle controller operates by counting pulses of this square wave in order to generate a square wave of required pulse width for controlling each H-bridge. In particular, a data value associated with each liquid lens is received via the serial bus 324, the serial bus decoder 421 and registers 422, and used by the duty cycle controller 418 to determine the required pulse width for driving each liquid lens. In Figure 6A, the signals on lines 450 and 452 from the duty cycle controller are illustrated, in each case the count being set at three rising edges of the timing signal on line 417. In the example shown, a 4-bit counter is used, such that the counter counts from 0 to 15 and then resets. In practice, however, in order to generate the required precision for controlling each of the H-bridges, a 10 or 12-bit counter could be used, providing, for example, between 1 and 1024 rising edges of the timing signal to be selected.

With reference to the signals on lines 450 and 452, the solid line illustrates the signal on line 450, used for controlling the positive pulse of the drive signal for the first liquid lens, whilst the dashed line illustrates the signal on line 452 used for controlling the negative pulse of the drive signal for the first liquid lens. According to the embodiment of Figure 6A, a fixed period of sixteen rising edges of the timing signal on line 417 is provided for the pulses, eight rising edges for the positive pulse and eight for the negative pulse. In practice such a period would be for example 1024 or 2048 rising edges of the timing signal in order to provide sufficient precision, and this period would represent, for example, a frequency of approximately 500 or 1000 Hertz, whilst the timing signal on line 417 has a frequency of, for example, approximately 1 MHz.

In alternative embodiments the time period between rising edges of the positive and negative pulses is not fixed, but instead a second counter could be used to determine the rest duration between the end of one pulse and the start of the next.

The output signal across lines 434 and 436 at the output of H-bridge 426 is also shown in Figure 6A. The positive pulse is thus amplified to V_{dc}, which is for example 60 volts. The negative pulse on line 452 is also amplified and provided across a liquid lens electrode in the opposite direction, thus providing a negative pulse of -V_{dc} across the liquid lens. The peak-to-peak voltage is thus 2V_{dc}.

In a second example, the second liquid lens is controlled such that the pulse width of the positive and negative pulses is five cycles of the timing signal on line 417 plus one half cycle. This is possible if the counter counts positive and negative edges of the timing signal. Again, the solid line illustrates signal line 454, and the dashed line illustrates the signal line 456. The amplified signal at the output of H-bridge 428 across lines 438 and 440 are also shown.

Figure 6B illustrates the timing of signals in a second embodiment of the duty cycle controller 418. The timing signal on line 417 is again a square wave, again with a frequency of approximately 1 MHz. In this embodiment, the signal to the first liquid lens on line 450, shown by the solid line, is a fixed-length pulse occurring at every other rising edge of the timing signal, thus five times in a ten pulse reference period. The signal for controlling the negative side of the liquid lens on line 452, as shown by the dashed wave, is also the same fixed-length pulse, but occurring after each alternate falling edge of the timing signal. As shown on lines 434 and 436, the positive and negative pulses, respectively, at the output of the first H-bridge 436 are thus fixed length pulses occurring at regular intervals.

An alternative pattern is generated by the duty cycle controller 418 on lines 454 and 456, in which three pulses are provided in within the ten-pulse reference period.

Whilst for clarity in the example illustrated in Figure 6B a reference period comprises only ten cycles of the timing signal, in practice, the reference period comprises for example 1024 or more cycles of the timing signal, allowing the required precision in control of the duty cycle, and thus the required precision in the control of the power to each lens. The selected pulses may be at regular intervals throughout the 1000 cycles of the timing signal, or alternatively grouped into smaller blocks.

Thus circuitry has been described that independently drives a plurality of liquid lenses, the circuitry comprising a common means for generating a required voltage level, and a duty cycle controller for controlling the power provided to each lens. This has the advantage that only one set of generating circuitry (inductor 406, capacitor 408, diode 410 and MOSFET 412) is required, minimizing the required resources. Furthermore, reliability and durability of the driving circuit are improved by limiting the number of components required, and particularly by limiting the number of active components.

Whilst an optoelectronic module incorporating the present invention has been described above as being incorporated in a mobile telephone, embodiments of the invention could be incorporated in different applications, in particular applications in which area is restricted. This includes mobile devices in general, for example laptop computer, PDAs (personal digital assistants) or wireless local area network devices, or other devices such as barcode readers.

The type of electrowetting device that may be driven by driving circuitry according to embodiments of the invention is not limited to devices in which a refractive interface between liquids is directly moveable by electrowetting, but includes lenses in which electrowetting is used to move a secondary interface, which in turn causes a refractive interface to move. Furthermore, electrowetting devices driven by embodiments of the invention could include alternative devices to lenses, such as variable liquid diaphragms.

Whilst the optoelectronic module 300 has been described as comprising an ISP 304 for determining the values of the drive voltages to each lens, in other embodiments alternative processing means could be used for determining these values, such as the baseband processor of a mobile phone, or a CPU (central processing unit).

Furthermore, whilst a number of examples have been provided in Figures 6A and 6B for the duty cycle control signals, alternative duty cycle formats are possible.

Whilst a serial bus 324 has been described for connecting the ISP 304 to the driver circuit 312, in alternative embodiments, a parallel bus or an alternative interface could be used, for example a wireless interface such as bluetooth.

Having thus described at least one illustrative embodiment of the invention, various alterations, modifications and improvements will readily occur to those skilled in the art. Such alterations, modifications and improvements are intended to be within the scope of the invention. Accordingly, the foregoing description is by way of example only and is not intended to be limiting. The invention is limited only as defined in the following claims and the equivalent thereto.

## Claims

1. Drive circuitry (312) for driving a plurality of liquid lenses, each liquid lens comprising first and second immiscible liquids, an interface between the first and second liquids being movable by electrowetting by application of a drive voltage signal, said drive circuitry arranged to generate an independent drive voltage signal for each of said liquid lenses, the drive circuitry comprising:
generating means (406, 408, 410, 412) arranged to generate a fixed drive voltage (V_{dc});
a duty cycle controller (418) arranged to receive data values indicating a duty cycle to be applied to each of said plurality of liquid lenses, and to generate a control timing signal for each of said plurality of liquid lenses, each control timing signal having the duty cycle indicated by the controller; and
driving means (426, 428, 430, 432) arranged to generate an independent drive voltage signal for each of said plurality of liquid lenses by selectively applying said fixed drive voltage, based on the control timing signal associated with each liquid lens.

2. The control circuitry of claim 1, further comprising control means (420) for receiving a feedback value of said fixed drive voltage (V_{dc}) via a feedback path (424, 506, 502) and controlling the level of said fixed drive voltage based on a comparison between said feedback value and a reference value (V_{REF}).

3. The drive circuitry of claim 1, wherein said generating means comprises at least one inductor (406), at least one capacitor (408) and at least one transistor (412).

4. The drive circuitry of claim 1, wherein said duty cycle controller comprises at least one counter arranged to count edges of a reference timing signal.

5. The drive circuitry of claim 4, further comprising frequency generating means (416) for generating said reference timing signal and providing said reference timing signal to said duty cycle controller (418) and said control means (420).

6. The drive circuitry of claim 1, further comprising an interface (421) for receiving said data values, and at least one register (422) for storing said data values.

7. The drive circuitry of claim 1, wherein said interface is a serial bus decoder (421).

8. The drive circuitry of claim 1, wherein each liquid lens comprises first and second electrodes, and said driving means comprises separate pairs of transistors (610 to 624) connected to said first electrodes and a common pair of transistors (634, 636) connected to said second electrodes.

9. The drive circuitry of claim 1, wherein each of said control timing signals comprises pulses, the width of said pulses determining the duty cycle of that control timing signal.

10. The drive circuitry of claim 1, wherein each of said control timing signals comprises a plurality of fixed length pulses, the number of said fixed length pulses in a given period determining the duty cycle of that control timing signal.

11. An optoelectronics module (300) comprising:
processing means (302, 304);
a plurality of liquid lenses (314);
an image sensor (318); and
the drive circuitry (312) as claimed in any preceding claim arranged to drive said plurality of liquid lenses.

12. A mobile device comprising the optoelectronic module (300) of claim 11.

13. A method of driving a plurality of liquid lenses, each liquid lens comprising first and second immiscible liquids, an interface between the first and second liquids being movable by electrowetting by application of a drive voltage signal, the method comprising:
generating a fixed drive voltage (V_{dc});
receiving data values indicating a duty cycle to be applied to each of said plurality of liquid lenses and based on said data values generating a control timing signal for each of said plurality of liquid lenses; and
generating an independent drive voltage signal for each of said plurality of liquid lenses by selectively applying said fixed drive voltage, based on the control timing signal associated with each liquid lens.
